# EUROPÄISCHE PATENTSCHRIFT

(11) **EP 4 321 787 B1**
(45) Veröffentlichungstag und Bekanntmachung des Hinweises auf die Patenterteilung: **22.10.2025**
(21) Anmeldenummer: 23188808.2
(22) Anmeldetag: 31.07.2023
(51) Int. Cl.: F16L 41/08

(54) **WELLROHR-ANSCHLUSSSTUTZEN**
CORRUGATED PIPE CONNECTING PIECE
RACCORD POUR TUYAU ONDULÉ

(30) Priorität: 08.08.2022 DE 202022104509 U
(43) Veröffentlichungstag der Anmeldung: 14.02.2024
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Patentanwälte Olbricht Buchhold Keulertz

(56) Entgegenhaltungen:
- EP-A1- 2 837 826
- DE-A1- 102009 034 612
- KR-A- 20110 128 438

## Beschreibung

Die Erfindung betrifft einen Anschlussstutzen nach dem Oberbegriff des Anspruchs 1.

Aus der DE 20 2020 106 261 U1 ist ein gattungsgemäßer Anschlussstutzen bekannt, der an ein Hauptrohr anschließen kann, welches insbesondere als Wellrohr ausgestaltet ist. Die KR 2011 0128438 A offenbart einen abweichenden Anschlussstutzen. Die EP 2 837 826 A1 offenbart einen Tankanschluss, Die DE 10 2009 034 612 A1 offenbart eine Anschlussvorrichtung für einen Behälter.

Die Erfindung betrifft einen Anschlussstutzen, der für den Anschluss eines Nebenrohrs über eine Abzweigöffnung an ein glattwandiges Hauptrohr geeignet ist, und zwar auch dann, wenn das Hauptrohr als Wellrohr ausgestaltet ist. Nachfolgend wird daher vereinfachend und stellvertretend für auch andere Arten von Hauptrohren stets lediglich ein Wellrohr erwähnt, weil dort die Vorteile der Erfindung besonders deutlich zum Tragen kommen. Aufgrund dieser Eignung wird der Anschlussstutzen auch als Wellrohr-Anschlussstutzen bezeichnet.

Bei Wellrohren ist eine innere, glatte Rohrwand von einer äußeren, wellig verlaufenden Rohrwand umgeben, wobei beide Rohrwände aus Kunststoffen bestehen. Die innere Rohrwand verläuft häufig in der Praxis nicht so glatt, wie dies in idealisierten Darstellungen des Wellrohrs ersichtlich ist, sondern mit einer Welligkeit, die aus der Welligkeit der äußeren Rohrwand resultiert, allerdings mit einer erheblich geringeren Amplitude. Das Anlegen einer Dichtung, die um die Abzweigöffnung herum der inneren Rohrwand dicht anliegen soll, wird durch diese Welligkeit der inneren Rohrwand erschwert, insbesondere da die in der Praxis häufig verwendeten Kunststoffe so leicht verformbar sind, dass sie um die Abzweigöffnung herum dem Druck des von innen anliegenden Dichtungsrings nachgeben und sich verformen können.

Der Erfindung liegt die Aufgabe zugrunde, einen gattungsgemäßen Wellrohr-Anschlussstutzen dahingehend zu verbessern, dass dieser eine möglichst zuverlässige Abdichtung des Anschlussstutzens an dem Wellrohr gewährleistet.

Diese Aufgabe wird durch einen Wellrohr-Anschlussstutzen nach Anspruch 1 gelöst. Vorteilhafte Ausgestaltungen sind in den Unteransprüchen beschrieben.

Die Erfindung schlägt mit anderen Worten vor, nicht nur am Innenteil den umlaufenden, radial nach außen ragenden Innenkragen vorzusehen, sondern auch am Außenteil einen umlaufenden, radial nach außen ragenden Kragen vorzusehen, der aufgrund seiner Anordnung am Außenteil als Außenkragen bezeichnet ist. Spannmittel erstrecken sich durch diese beiden Kragen und somit auch durch den Dichtungsring. Die Spannmittel sind so ausgestaltet, dass mit ihrer Hilfe der Abstand zwischen den beiden Kragen verringert werden kann. Die Spannmittel erlauben es, den Dichtungsring mit einer hohen Anpresskraft an das Innere des Wellrohrs anzupressen, und zwar in einer Entfernung vom Rand der Abzweigöffnung, wo das Wellrohr und insbesondere dessen innere Rohrwand eine höhere Formstabilität aufweist als am Rand der Abzweigöffnung. Dementsprechend kann eine Verformung des Wellrohrs auf seiner Innenseite unter dem Druck der anliegenden Dichtung weitestgehend oder sogar vollständig vermieden werden und jedenfalls auf ein solches Ausmaß begrenzt werden, dass die gewünschte Abdichtung, die mithilfe des Dichtungsrings gegenüber den im Wellrohr geführten Medien erreicht werden soll, zuverlässig erreicht und beibehalten werden kann.

Vorschlagsgemäß können die Spannmittel nicht nur Zugkräfte in der jeweiligen axialen Richtung des Spannmittels, sondern auch die beim Spannen des Spannmittels durch das Innenteil wirkenden Biegemomente aufnehmen. Dazu kann der Anschlussstutzen besonders vorteilhaft eine Stützführung aufweisen, die einem Spannmittel beispielsweise seitlich anliegt und dieses dadurch abstützt, so dass ein Spannmittel gehindert ist, seitlich wegzukippen und so dass die Spannmittel einer Verdrehung des Innenkragens bzw. des Innenteils nicht nachgeben, sondern dieser entgegenwirken.

Vorteilhafterweise kann das Außenteil eine Stützführung aufweisen, beispielsweise geschaffen durch einen im Folgenden noch zu erläuternden Sockel, durch welchen sich die Spannmittel erstrecken. Ebenso kann eine zumindest abschnittsweise höhere Materialstärke im Querschnitt des Außenteils vorgesehen sein, um eine seitlich abstützende Wirkung für die Spannmittel verwirklichen zu können, um den auftretenden Torsionskräften ausreichend entgegenwirken zu können.

In einer Weiterentwicklung kann der Zylinderabschnitt des Innenteils eine Stützführung aufweisen, wobei insbesondere vorgesehen sein kann, dass sich die Spannmittel durch den Zylinderabschnitt erstrecken und dass in dem Zylinderabschnitt Elemente einer Stützführung angeordnet sind. Im einfachsten Fall kann die Wandung des Zylinderabschnittes zumindest abschnittsweise als Stützführung für ein Spannmittel fungieren, solange ein Kontakt vorliegt zwischen Spannmittel und Zylinderabschnittwandung. Eine Stützführung kann auch dadurch erreicht werden, die vorgesehene Materialstärke des Innenkragens im Querschnitt zu erhöhen, wobei zu beachten ist, dass der Innenkragen in der Art verformbar sein muss, damit dieser in das Innere des Wellrohrs durch die Abzweigöffnung hindurch führbar bleibt.

Beispielsweise können Schrauben als Spannmittel verwendet werden, so dass z. B. genormte Spannelemente in Form von DIN Schrauben die Möglichkeit bieten, genau definierte Drehmomente bei der Betätigung der Spannmittel aufzubringen, und so dass die Erzielung der gewünschten Dichtheit gewährleistet werden kann.

Die Spannmittel können von der Innenseite des Wellrohrs her betätigt werden, so dass eine versehentliche Einwirkung von außen verhindert ist. In einer als vorteilhaft erachteten Ausgestaltung sind die Spannmittel jedoch von der Außenseite des Wellrohrs her betätigbar, was die Montage des Anschlussstutzens erleichtert, und aufgrund der einfacheren Zugänglichkeit auch eine Demontage des Anschlussstutzens sowie eine Betätigung der Spannmittel auch nach mehreren Jahren erleichtert. Zu diesem Zweck können im Außenkragen Öffnungen angeordnet sein, durch welche sich die Spannmittel erstrecken, so dass die jeweiligen Betätigungsabschnitte der Spannmittel von der Außenseite her zugänglich sind. Als Betätigungsabschnitt ist in diesem Zusammenhang der Bereich der Spannmittel bezeichnet, welcher betätigt werden kann, um den Abstand zwischen dem Außenkragen und dem Innenkragen zu verringern. Beispielsweise können Schrauben als Spannmittel verwendet werden, und der Schraubenkopf kann jeweils innen im Wellrohr liegen, während sich der Schaft der Schraube nach außen erstreckt, so dass das Gewinde der Schraube und eine auf der Schraube befindliche Mutter von der Außenseite des Wellrohrs her zugänglich sind.

Ebenso kann das Innenteil Gewindebohrungen aufweisen, in die eine Schraube zum Spannen des Anschlussstutzens eingeschraubt werden kann.

Im Außenkragen können die Öffnungen, die für die Hindurchführung der Spannmittel vorgesehen sind, in einer Ausgestaltung schlüssellochartig ausgestaltet sein. Als schlüssellochartig ist in diesem Zusammenhang eine Ausgestaltung der Öffnungen bezeichnet, die einen ersten Abschnitt mit einem vergleichsweise größeren Querschnitt aufweist sowie einen zweiten Abschnitt mit einem demgegenüber geringeren Öffnungsquerschnitt. Dies ermöglicht eine Montage des Anschlussstutzens, bei welcher der Außenkragen auf die bereits vormontierten Spannmittel aufgesetzt werden kann. Ausgehend von dem oben erwähnten Beispiel von Schrauben können beispielsweise die Muttern bereits auf den Schrauben vormontiert sein, so dass an der Baustelle die Handhabung einzelner, kleiner loser Teile möglichst vermieden werden kann. Wenn der Außenkragen auf die Spannmittel des Innenteils aufgesetzt wird, erlaubt der erste, größere Abschnitt der schlüssellochartigen Öffnungen, die Muttern der Spannmittel durch diese Öffnungen durchzuführen, so dass das Außenteil des Anschlussstutzens auf das Innenteil und die Spannmittel aufgesetzt werden kann.

Anschließend kann der Außenkragen um ein geringes Winkelmaß um seine Mittelachse gedreht werden, so dass nun die Spannmittel jeweils in dem zweiten Abschnitt der Öffnungen aufgenommen werden, der einen geringeren Querschnitt aufweist und in dem genannten Beispiel den Schraubenschäften eng anliegen kann. Auf diese Weise ergibt sich für die Muttern eine größere Fläche, über die sie sich an dem Außenkragen abstützen können, so dass die Flächenpressungen, die zwischen den Spannmitteln und dem Außenkragen wirken, reduziert werden können. Dabei ist vorgesehen, dass jeweils um den zweiten, kleineren Abschnitt einer Öffnung eine Fläche verläuft, die als Anlagefläche für den Betätigungsabschnitt des zugehörigen Spannmittels ausgestaltet ist. Je nach der geometrischen Ausgestaltung des Spannmittels kann durch diese Anpassung des Außenkragens an die Spannmittel-Geometrie die erwähnte Flächenpressung möglichst gering gehalten werden. Bei dem erwähnten Beispiel der Muttern kann die Anlagefläche als Ebene ausgestaltet sein, die quer zur Längsachse der Schraube verläuft, um eine möglichst großflächige Abstützung der Mutter am Außenkragen des Anschlussstutzens zu ermöglichen.

In einer Ausgestaltung kann der Außenkragen um den zweiten Abschnitt jeweils einen Sockel ausbilden, wobei aufgrund des gebogenen Verlaufs des Außenkragens die Sockel unterschiedlich ausgestaltet sind. Die Oberseiten der Sockel bilden jeweils Anlageflächen, auf der sich die Mutter des jeweiligen Spannmittels abstützen kann. Einem Spannmittel anliegend kann der Sockel als Stützführung ausgestaltet sein.

Das Spannmittel dient zum einen zur Aufbringung der Zugkraft auf den Innenkragen und zum anderen dient es als Hebel, um den durch die beim Spannen wirkenden Zugkräfte und den daraus resultierenden Torsionskräften insbesondere im Innenkragen entgegenzuwirken. Dies kann dadurch gelingen, dass in dem zweiten Abschnitt das Spannmittel einer Stützführung sehr eng anliegt und abschnittsweise geführt ist. Das Spannmittel kann daher vorteilhaft in Zugrichtung, aber auch für die aufkommenden Hebelkräfte eine ausreichende Festigkeit aufweisen.

Bei der Ausgestaltung der Spannmittel als Schrauben kann in einer Ausgestaltung vorgesehen sein, dass die Schraubenköpfe von der Außenseite des Wellrohrs her betätigt werden können und den erwähnten Betätigungsabschnitt der Spannmittel bilden. In einer anderen Ausgestaltung kann die Ausrichtung der Schrauben jedoch geradezu umgekehrt jeweils so gewählt sein, dass die Schraubenköpfe im Inneren des Anschlussstutzens liegen, indem sie den Innenkragen hintergreifen, und dass sich die Schäfte der Schrauben zur Außenseite des Wellrohrs und damit über den Außenkragen des Außenteils hinaus nach außen erstrecken, so dass der Betätigungsabschnitt der Spannmittel jeweils durch die Mutter und das zugeordnete Gewinde geschaffen ist. Eine abgestützte Führung in den schlüssellochartigen Öffnungen kann einer Kippbewegung des Spannmittels entgegenwirken.

Der Dichtungsring kann in einer Ausgestaltung mehrere Dichtungszonen aufweisen:
- eine erste Dichtungszone wird als axiale Dichtungszone bezeichnet, weil sie in axialer Richtung des Anschlussstutzens wirksam ist. Sie verläuft radial außerhalb und parallel zu dem Zylinderabschnitt des Innenteils dort, wo der Dichtungsring der Innenseite des Wellrohrs anliegt.
- Eine zweite, sogenannte radiale Dichtungszone verläuft auf der radial inneren Oberfläche des Dichtungsrings und wirkt in radialer Richtung, nämlich dort, wo der Dichtungsring dem äußeren Umfang eines Bauteils anliegt, z. B. dem im Wesentlichen rohrförmigen Außenteil. Vorliegend wird dieser axial in die Abzweigöffnung ragende Abschnitt des Außenteils als Stutzen bezeichnet.
- Eine dritte Dichtungszone weist der Dichtungsring jeweils dort auf, wo sich die Spannmittel durch den Dichtungsring erstrecken, so dass das jeweilige Spannmittel gegen den Dichtungsring abgedichtet ist.

Mit Bezug auf das oben genannte Beispiel, Schrauben als Spannmittel zu verwenden, können beispielsweise Schrauben mit Teilgewinde verwendet werden, wobei das Gewinde auf den Betätigungsabschnitt beschränkt ist und die Schrauben dort, wo sie sich durch den Dichtungsring erstrecken, einen gewindelosen Schaft aufweisen. Der Dichtungsring kann Durchführungsöffnungen aufweisen, deren Durchmesser geringer ist als der Durchmesser der Spannmittel, beispielsweise als der Schaftdurchmesser der erwähnten Teilgewinde-Schrauben, so dass eine dichte Anlage des Dichtungsrings an den durch den Dichtungsring hindurchgeführten Spannmitteln im Bereich der dritten Dichtungszone gewährleistet ist. Alternativ dazu, oder auch ergänzend, können kleine Dichtringe direkt unter dem Schraubenkopf vorgesehen werden, die aufgrund ihrer Abmessungen dem Schaft der jeweiligen Schraube dicht anliegen und zusätzlich beim Anziehen der Schraube verpresst werden, was erstens in radialer Richtung die dichte Anlage am Schaft der Schraube verbessert und zweitens eine Abdichtung unterhalb des Schraubenkopfes in zur Schraube achsparalleler Richtung sicherstellt.

Vorzugsweise kann das Innenteil, insbesondere der Innenkragen, weitgehend verformungsstabil ausgestaltet sein, um beispielsweise die Kräfte beim Spannen der Spannmittel aufnehmen zu können und eine abdichtungswirksame Verbindung herstellen zu können. Beispielsweise können die Materialeigenschaften des Innenteils einer Falten- bzw. Wellenbildung entgegenwirken unterstützend eine dichte Anlage des Dichtungsrings an der inneren Oberfläche des Wellrohrs. Dazu kann das Innenteil einen faserverstärkten Kunststoff aufweisen, vorzugsweise glasfaserverstärktes Polypropylen, wobei zusätzliche oder alternative Faserverstärkungen in Betracht kommen können. Dem zug- und druckfesten Innenteil ist der Dichtungsring anliegend angeordnet.

Wie bereits oben erwähnt, ist ein radial von der Abzweigöffnung beabstandeter Anlage- bzw. Druckpunkt der Ringdichtung an der Innenwand des Wellrohrs einer besserer Abdichtung zuträglich. Dazu kann vorgesehen sein, dass die Ausgestaltung bzw. Formgebung des Innenkragens eine radiale Verlagerung des Druckpunktes nach außen unterstützt. In einer Weiterbildung kann der Innenkragen in sich gekrümmt sein und zwar in Richtung des Zylinderabschnitts, sodass beim Spannen der Spannmittel insbesondere die am stärksten gekrümmten Abschnitte des Innenkragens, beim Anliegen an der inneren Rohrwand druckbeaufschlagt werden und in Verbindung mit der Ringdichtung eine Abdichtung bewirken. Alternativ, oder auch zusätzlich, kann der Innenkragen einen nach radial außen zunehmenden Querschnitt aufweisen, insbesondere durch eine zunehmende Materialstärke, so dass beim Spannen der Spannmittel wiederrum eine Verlagerung des Druckpunktes nach radial außen unterstützt wird. Neben einer verbesserten Abdichtung, kann die Druckpunktverlagerung das durch die Abzweigöffnung geschwächte Wellrohr somit formstabilisieren.

Bohrungen für Hausanschlüsse zur Herstellung von Abzweigöffnungen weisen in der Praxis regelmäßig einen Durchmesser von 160 mm und größer auf. Beispielsweise um eine möglichst weite radial nach außen gerichtete Verlagerung eines abdichtenden Druckpunktes zu erzielen und um beispielsweise ein bohrungsbedingt geschwächtes Wellrohr stabilisieren zu können, haben erste Untersuchungen gezeigt, dass in einer Ausgestaltung der Außendurchmesser des Innenkragens vorteilhafterweise um den Faktor 1,1 bis 1,3 größer sein kann als der Durchmesser der Bohrung bzw. der Abzweigöffnung. Die aus der Praxis bekannten Anschlüsse weisen dagegen einen deutlich kleineren Außendurchmesser von innenliegenden, abdichtenden Kragen auf. Vorliegend bevorzugt beträgt der Faktor zwischen 1,14 und 1,15, wobei insbesondere ein Faktor von 1,145 bevorzugt sein kann. Bei einer Bohrung im Durchmesser von 200 mm hätte der Innenkragen bei einem Faktor 1,145 einen Außendurchmesser von 229 mm.

Ein Ausführungsbeispiel der Erfindung wird anhand der rein schematischen Darstellungen nachfolgend näher erläutert, wobei einzelne Merkmale oder eine Kombination von Merkmalen des dargestellten Ausführungsbeispiels auch unabhängig von der übrigen Ausgestaltung des Ausführungsbeispiels bei einem vorschlagsgemäßen Anschlussstutzen verwirklicht sein können. Dabei zeigt
- Fig. 1: eine perspektivische Ansicht auf einen Anschlussstutzen, der mitsamt einem Anschlussstück an einem als Wellrohr ausgestalteten Hauptrohr montiert ist,
- Fig. 2: einen Schnitt durch den Anschlussstutzen quer zur Wellrohr-Längsachse und in axialer Richtung des Anschlussstutzens,
- Fig. 3: eine Ansicht ähnlich Fig. 1, ohne dass Anschlussstück,
- Fig. 4: eine Seitenansicht auf ein Außenteil des Anschlussstutzens,
- Fig. 5: eine perspektivische Ansicht auf einen Dichtungsring,
- Fig. 6: eine perspektivische Ansicht von außen auf ein Innenteil des Anschlussstutzens,
- Fig. 7: eine perspektivische Ansicht von innen auf das Innenteil,
- Fig. 8: eine perspektivische Ansicht vom Inneren des Wellrohrs auf einen mithilfe des Anschlussstutzens hergestellten Rohrabzweig, und
- Fig. 9: einen Schnitt durch den Anschlussstutzen parallel zur Wellrohr-Längsachse.

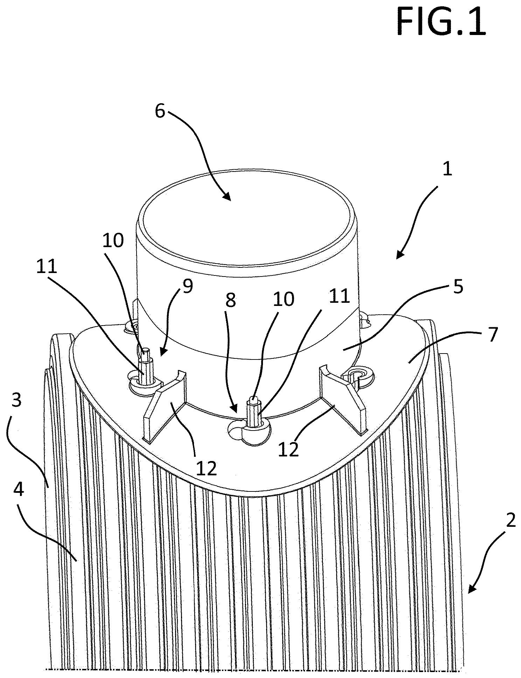

In Fig. 1 ist ein Anschlussstutzen 1 dargestellt, der an einem Wellrohr 2 montiert ist. Das Wellrohr 2 weist eine glatte innere Rohrwand 3 auf und eine wellig verlaufende äußere Rohrwand 4. Von dem Anschlussstutzen 1 ist ein Außenteil 5 ersichtlich, welches im Wesentlichen rohrförmig ausgestaltet ist und sich in eine Abzweigöffnung 14 des Wellrohrs 2 erstreckt. Mit dem Außenteil 5 des Anschlussstutzens 1 ist ein lediglich teilweise dargestelltes und rein schematisch angedeutetes Anschlussstück 6 verbunden, beispielsweise kann es sich um ein Kanalrohr aus Kunststoff handeln. Die in Fig. 1 ersichtliche Ausrichtung sowohl des Wellrohrs 2 als auch des Außenteils 5 und des Anschlussstücks 6 sind rein beispielhaft. Abweichend von der Darstellung in Fig. 1 kann der Anschlussstutzen 1 beispielsweise horizontal verlaufen.

Das Außenteil 5 weist einen radial nach außen ragenden, umlaufenden Außenkragen 7 auf, der dem Durchmesser des Wellrohrs 2 angepasst gebogen verläuft und mehrere Öffnungen 8 aufweist. Weiterhin sind in Fig. 1 einige der für diesen Anschlussstutzen 1 vorgesehenen Spannmittel 9 dargestellt, wobei es sich jeweils um Schrauben 10 und Muttern 11 handelt. Zur Stabilisierung weist das Außenteil 5 Stützrippen 12 auf. Die Stützrippen 12 dienen zudem auch als Kraftangriff und ermöglichen es, das Außenteil 5 manuell oder mittels eines Werkzeugs zu greifen, um das Außenteil 5 beim Kopplungsvorgang gegenüber einem noch zu erläuternden Innenteil zu verdrehen.

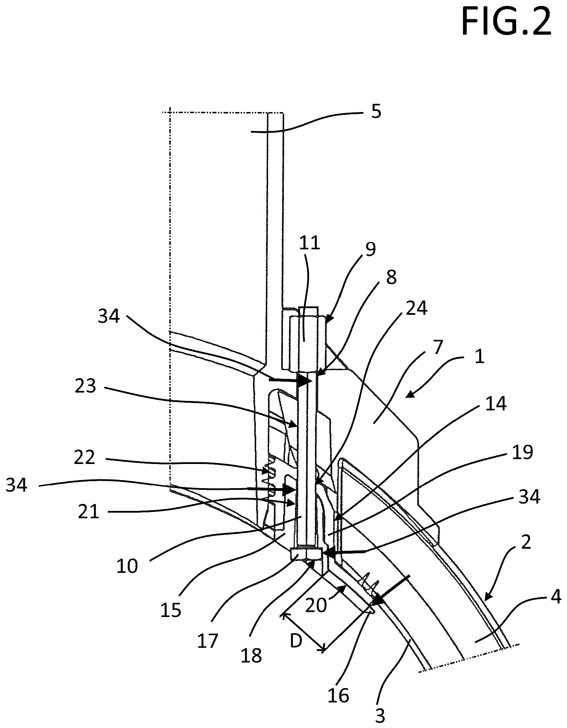

In Fig. 2 ist ersichtlich, dass das Wellrohr 2 mit einer Abzweigöffnung 14 versehen ist, in die sich das Außenteil 5 sowie ein Innenteil 15 des Anschlussstutzens 1 erstrecken. Das Innenteil 15 weist einen sogenannten Innenkragen 16 auf, der im Inneren des Wellrohrs 2 verläuft. Die Schrauben 10 der Spannmittel 9 weisen jeweils einen Schraubenkopf 17 auf, der in einer Aufnahmemulde 18 des Innenteils 15 formschlüssig aufgenommen ist. Abweichend von dem dargestellten Ausführungsbeispiel kann ein Dichtungsring in der Mulde 18 unterhalb des Schraubenkopfes 17 vorgesehen werden. Ein Dichtungsring 19 verläuft zwischen dem Innenkragen 16 und der Innenseite des Wellrohrs 2 und weist drei Dichtungszonen auf.

Eine erste Dichtungszone 20 wird als axiale Dichtungszone bezeichnet, weil sie in axialer Richtung des Anschlussstutzens wirksam ist. Die erste Dichtungszone 20 verläuft radial außerhalb und parallel zu einem Zylinderabschnitt 21 des Innenteils 15, welcher sich in die Abzweigöffnung 14 des Wellrohrs 2 erstreckt. Die erste Dichtungszone 20 erstreckt sich in radialer Richtung über einen Dichtungsbereich D dort, wo der Dichtungsring 19 der inneren Rohrwand 3 des Wellrohrs 2 anliegt.

Über diese erste Dichtungszone 20 hinaus, in welcher der Dichtungsring 19 außen um den Zylinderabschnitt 21 des Innenteils 15 umläuft, weist der Dichtungsring 19 eine zweite Dichtungszone 22 auf, die als radiale Dichtungszone bezeichnet wird, weil sie auf der radial inneren Oberfläche des Dichtungsrings 19 verläuft und in radialer Richtung wirkt, nämlich dort, wo der Dichtungsring 19 dem äußeren Umfang des Außenteils 5 anliegt.

Außerdem weist der Dichtungsring 19 mehrere dritte Dichtungszonen 23 jeweils dort auf, wo sich die Spannmittel 9 durch den Dichtungsring 19 erstrecken. Die dritten Dichtungszonen 23 werden an mehreren Durchführungsöffnungen 24 geschaffen, die der Dichtungsring 19 aufweist und durch die sich die glatten Schäfte der als Teilgewindeschrauben ausgestalteten Schrauben 10 erstrecken. Der Durchmesser, den die Durchführungsöffnungen 24 des unverformten Dichtungsrings 19 aufweisen, ist geringer als der Schaftdurchmesser der Schrauben 10, so dass sich unter elastischer Verformung des Dichtungsrings 19 die Durchführungsöffnungen 24 weiten, wenn die Schrauben 10 hindurchgeführt werden, und so dass sich anschließend die Ränder der Durchführungsöffnungen 24 abdichtend an den jeweiligen Schaft der Schraube 10 anlegen.

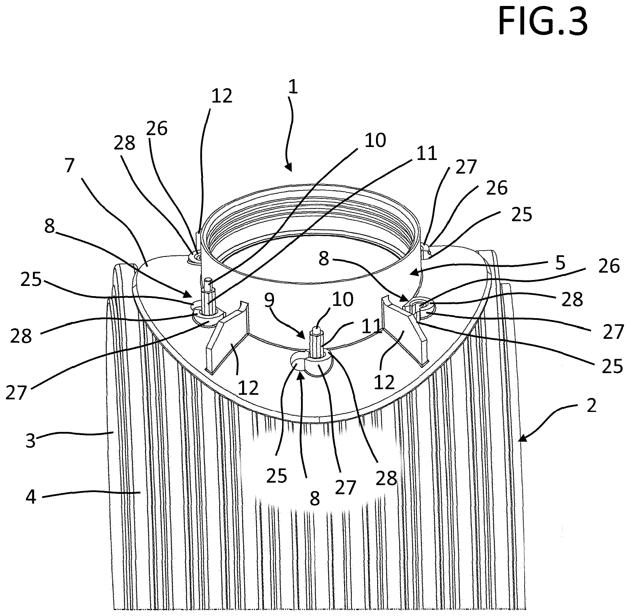

Fig. 3 zeigt den Anschlussstutzen 1 ohne das in Fig. 1 ersichtliche Anschlussstück 6. Im Außenkragen 7 sind die Öffnungen 8 jeweils schlüssellochartig ausgestaltet, indem sie einen ersten Abschnitt 25 aufweisen, der das Hindurchführen der jeweiligen Schraube 10 samt Mutter 11, also des Betätigungsabschnitts des der jeweiligen Öffnung 8 zugeordneten Spannmittels 9 ermöglicht. Ein zweiter Abschnitt 26 der Öffnung 8 weist einen geringeren Querschnitt auf als der erste Abschnitt 25, so dass nach einer entsprechenden Rotation des Außenteils 5 um einen bestimmten Drehwinkel die Schrauben 10 durch diesen zweiten Abschnitt 26 verlaufen, wie in Fig. 3 dargestellt. Dabei umgibt der Außenkragen 7 im Bereich des zweiten Abschnitts 26 die Schraube 10 mit geringem Abstand oder kontaktiert die Schraube 10 sogar. Um den zweiten Abschnitt 26 bildet der Außenkragen 7 jeweils einen Sockel 27, wobei aufgrund des gebogenen Verlaufs des Außenkragens 7 die Sockel 27 unterschiedlich ausgestaltet sind. Die Oberseiten der Sockel 27 bilden jeweils Anlageflächen 28, auf der sich die Mutter 11 des jeweiligen Spannmittels 9 abstützt.

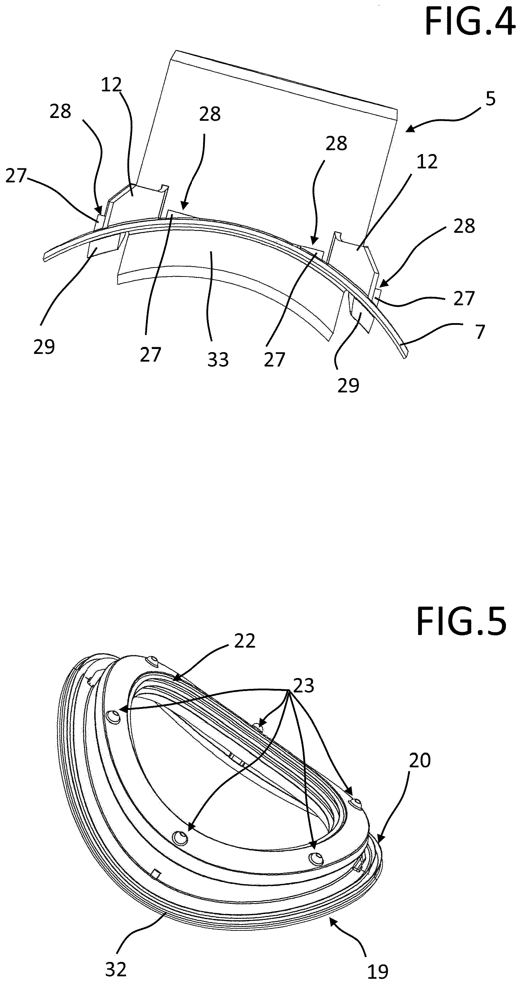

Fig. 4 zeigt das Außenteil 5 in separater Darstellung. An den Außenkragen 7 sind Stütznasen 29 angeformt, die sich in die Abzweigöffnung 14 erstrecken, wenn der Anschlussstutzen 1 an einem Wellrohr 2 montiert ist, wobei dabei die Stütznasen 29 am Rand der Abzweigöffnung 14 dem Wellrohr 2 anliegen. Als Stutzen 33 wird vorliegend der Abschnitt des rohrförmigen Außenteils 5 bezeichnet, der axial in die Abzweigöffnung 14 ragt.

Fig. 5 zeigt den Dichtungsring 19 von außen in separater Darstellung. Die drei Dichtungszonen 20, 22 und 23 sind erkennbar, und insbesondere ist ersichtlich, dass der Dichtungsring 19 im Bereich der ersten und zweiten Dichtungszonen 20 und 22 jeweils mehrere parallel zueinander verlaufende Dichtrippen 32 und im Bereich dritten Dichtungszonen 23 jeweils Vorsprünge bildet.

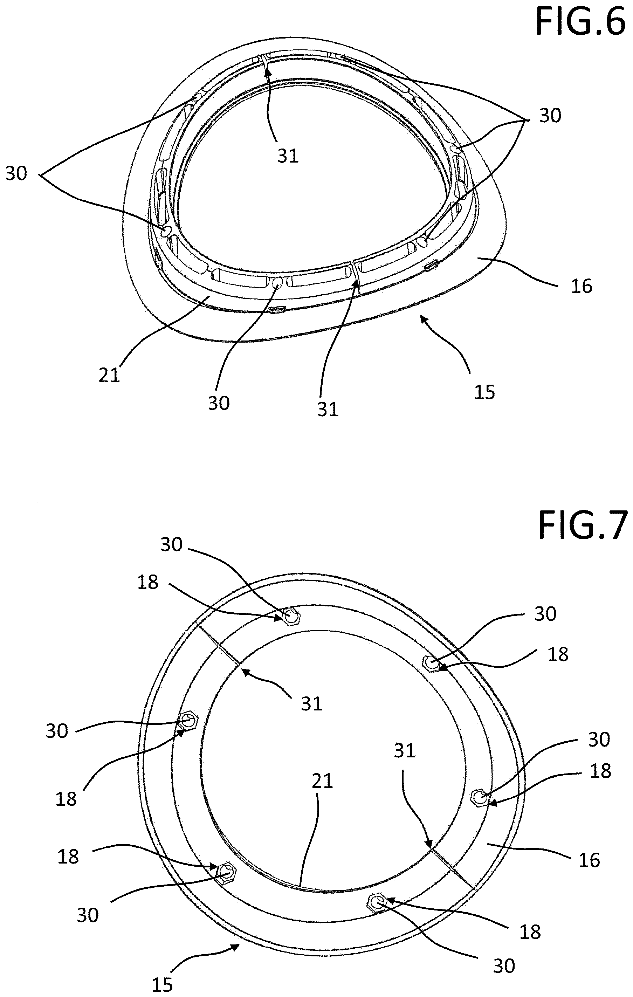

Fig. 6 zeigt das Innenteil 15 von außen in separater Darstellung. Bohrungen 30 im Zylinderabschnitt 21 dienen dazu, die Schrauben 10 aufzunehmen. Kerben 31 im Zylinderabschnitt 21 ermöglichen es, das Innenteil 15 so weit zu falten, dass es durch die Abzweigöffnung 14 in das Innere des Wellrohrs 2 geführt werden kann. Dort kann das Innenteil 15 auseinandergefaltet werden, so dass der Innenkragen 16 rings um die Abzweigöffnung 14 dem Wellrohr 2 von innen angelegt werden kann, unter Zwischenschaltung des Dichtungsrings 19. Anders als dargestellt, kann der Innenkragen 16 auch keine Kerben 31 aufweisen, sondern stattdessen in einer geschlossenen Ringform ausgestaltet sein, um beispielsweise eine das Wellrohr 2 im Bereich der Abzweigöffnung 14 abstützende Wirkung zu maximieren. Das Innenteil 15 besteht bei dem dargestellten Ausführungsbeispiel aus einem steifen Werkstoff, der eine gute Stützwirkung sicherstellt, mit welcher der Innenkragen 16 den Dichtungsring 19 im Bereich der ersten Dichtungszone 20 gegen die innere Rohrwand 3 abstützt. Und zwar weist das Innenteil dafür glasfaserverstärktes Polypropylen auf. Die Kerben 31 können entfallen, wenn das Innenteil 15 zumindest im Bereich seines Zylinderabschnitts 21 weniger steif ausgestaltet und dementsprechend leichter verformbar ausgestaltet ist.

Fig. 7 zeigt das Innenteil 15 von dessen Innenseite her, die im montierten Zustand in das Innere des Wellrohrs 2 weist. Im Innenkragen sind die Bohrungen 30 erkennbar sowie Aufnahmemulden 18, die jeweils einer Bohrung 30 zugeordnet sind und dazu dienen, den jeweiligen Schraubenkopf 17 der durch die Bohrung 30 verlaufenden Schraube 10 formschlüssig und verdrehsicher aufzunehmen. Optional und je nach dem verwendeten Werkstoff können in das Innenteil 15 mehr als die beiden aus Fig. 6 und 7 ersichtlichen Kerben 31 eingebracht sein, um eine kontrollierte Verformung des Innenteils 15 zu unterstützen und zu ermöglichen, das Innenteil 15 zu knicken oder zu falten, um durch diese Verformung das Einführen des Innenteils 15 in die Abzweigöffnung 14 eines Wellrohres 2 zu vereinfachen.

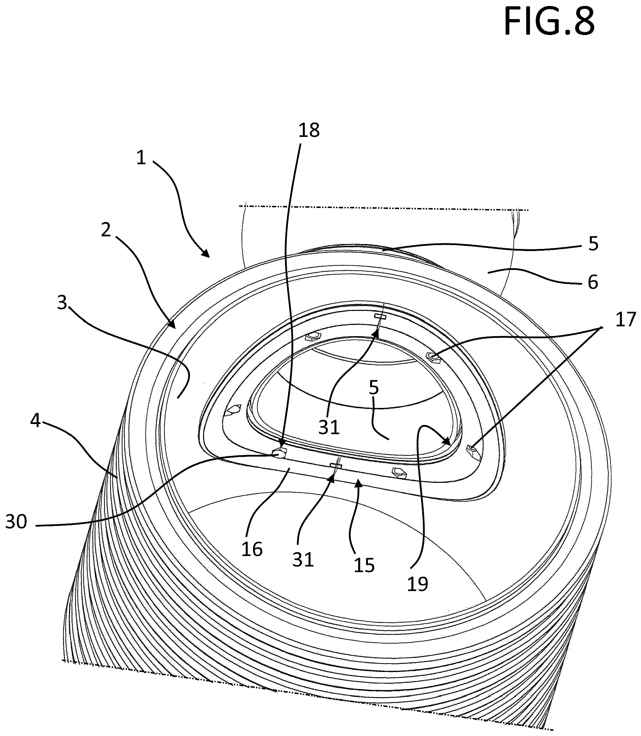

Fig. 8 zeigt den Anschlussstutzen 1 im teilmontierten Zustand von dessen Innenseite her, mit einer Blickrichtung aus dem Inneren des Wellrohrs 2. In einige der Aufnahmemulden 18 sind die Schrauben 10 eingesetzt, so dass die Schraubenköpfe 17 erkennbar sind. An anderen Stellen sind die Spannmittel 9 noch nicht montiert, so dass im Innenkragen 16 des Innenteils 15 an diesen Stellen die Bohrungen 30 und die sie umgebenden Aufnahmemulden 18 erkennbar sind. Außerhalb des Wellrohrs 2 ist ein Anschlussstück 6 ersichtlich, welches an das Außenteil 5 anschließt und bei dem dargestellten Ausführungsbeispiel als so genannter Kugeladapter ausgestaltet ist, nämlich als Anschlussstück 6, das eine Muffe aufweist, die ähnlich einem Kugelgelenk in mehreren Richtungen beweglich ist und einen dementsprechend winkeltoleranten Anschluss einer Rohrleitung ermöglicht.

In Fig. 2 weisen vier geradlinige Pfeile auf vier unterschiedliche Stellen des dargestellten Anschlussstutzens 1 hin, um zu verdeutlichen, wie die Kräfte in einigen Bereichen des Anschlussstutzens 1 wirken. Dabei weisen die geradlinigen Pfeile, in Fig. 2 von rechts nach links gesehen, auf die folgenden Bereiche:
- auf den Dichtungsbereich D, insbesondere auf dessen radial äußeren, umfangsmäßig verlaufenden Rand,
- auf den Schraubenkopf 17 als unteren Bereich des Spannmittels 9,
- auf den Rand der Öffnung 8, wo sich die Mutter 11 des Spannmittels 9 auf der Anlagefläche 28 abstützt, und schließlich
- auf den Bereich der Schraube 10, der als gewindeloser Schaft ausgestaltet sein kann und sich in dem Innenteil 15 abstützt.

Bei dem Anschlussstutzen 1 liegt der Druckpunkt des Dichtungsrings 19 in dem Dichtungsbereich D, insbesondere in dessen radial äußerem, umfangsmäßig verlaufendem Rand. Dieser Druckpunkt kann weit weg von der Bohrung, also vom Rand der Abzweigöffnung 14 verlaufen, da die Spannmittel 9 nicht nur Zugkräfte in der jeweiligen axialen Richtung des Spannmittels 9, sondern auch die Biegemomente (Torsion) des Innenteils 5 aufnehmen können und gegen Kippbewegungen gut abgestützt sind, insbesondere abgestützt durch die Stützführung 34 am Innenteil 15 und am Außenteil 5. Durch die Position der schlüssellochartigen Öffnungen 8 in dem Außenteil 5 können die Spannelemente 9 nicht zur Außenseite wegkippen und geben so einer Verdrehung des Innenkragens 16 bzw. des Innenteils 15 nicht nach. Andererseits kann der Innenkragen 16 auch nicht in radialer Richtung nach innen, zur Mitte der Abzweigöffnung 14 ausweichen, da er durch den in die Abzweigöffnung 14 ragenden Stutzen 33 des Außenteils 5 und durch seine eigene Formgebung als vorzugsweise geschlossene kreisrunde Struktur gestützt wird. Die Spannmittel 9 werden im Außenteil 5 gehalten und der Innenkragen 16 kann sich dadurch nicht verdrehen. Insbesondere dass der Innenkragen 16 des Innenteils 15 grundsätzlich eine geschlossene kreisrunde Struktur aufweist, kann zur Funktion des Anschlussstutzens 1 beitragen.

Bei dem dargestellten Ausführungsbeispiel sind über den Umfang des Anschlussstutzens 1 verteilt insgesamt sechs Spannmittel 9 angeordnet. Aufgrund dessen kann der Innenkragen 16 sich nur gegen die Rohrwandung des Wellrohrs 2 pressen, da er in umlaufender Richtung keine Wellen oder Falten bilden kann. Eine eigene geschlossene Ringformgebung des Innenkragens 16 sowie ein zug- und druckkraftfestes Material des Innenkragens 16 wirken ferner einer Falten- bzw. Wellenbildung desselben entgegen. Insgesamt unterstützt dies eine dichte Anlage des Dichtungsrings 19 an der inneren Rohrwand 3 des Wellrohrs 2. Weiterhin bewirkt die vergleichsweise große Anzahl an Spannmitteln 9 und die dadurch erreichte mehrfache Verschraubung des Außenteils 5 mit dem Innenteil 15 eine große Stützwirkung des Wellrohrs 2, an welches der Anschlussstutzen 1 angeschlossen wird. Das Wellrohr 2 wird einerseits zunächst durch die Schaffung der Abzweigöffnung 14 geschwächt, was jedoch andererseits durch die Montage des Anschlussstutzens 1 dann wieder zumindest teilweise kompensiert wird.

Der Anschlussstutzen 1 ist extrem gut dagegen gesichert, bei einwirkenden Scherlast aus dem Wellrohr 2 herausgedreht zu werden.

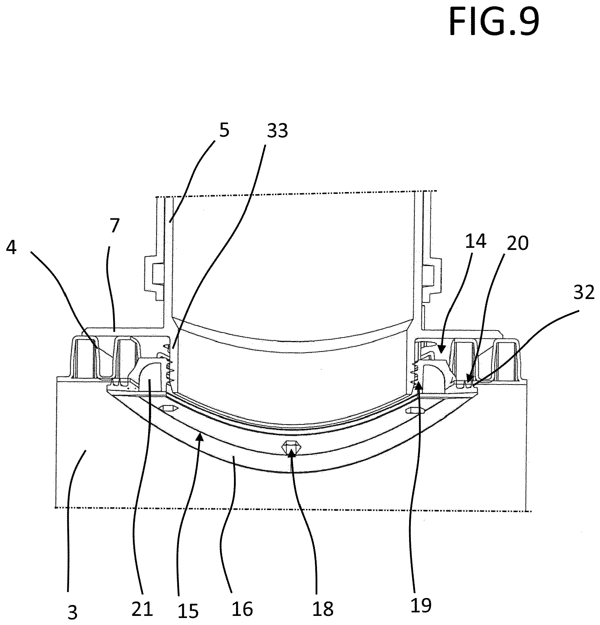

Einen Schnitt durch den Anschlussstutzen im Wesentlichen parallel zur Wellrohr-Längsachse, zeigt Fig. 9. Das Außenteil 5 erstreckt sich durch die Abzweigöffnung 14 und liegt dem Innenteil 15 wie zuvor erläutert an. Der Außenkragen 7 des Außenteils 5 begrenzt die Eindringtiefe des Außenteils 5 in die Abzweigöffnung 14, indem der Außenkragen 7 den äußeren, zirkumferenten Wellen der äußeren Rohrwand 4 des Wellenrohrs 2 aufliegt. Zwischen dem Innenkragen 16 und der inneren Rohrwand 3 des Wellrohrs 2 ist der Dichtungsring 19 angeordnet ausbildend eine erste Dichtungszone 20. Am radial äußeren, umfangsmäßig verlaufenden Randbereich weist der Dichtungsring 19 Dichtrippen 32 auf, um beim Spannen der Spannmittel 9, die in Fig. 9 vereinfachender Weise nicht dargestellt sind, einen dichtungswirksamen Druckpunkt möglichst weit nach radial außen zu verlagern.

In dem vorliegenden Ausführungsbeispiel in Fig. 9 weist der Innenkragen 16 eine radial nach außen zunehmende Verformungssteifigkeit auf mit einer Maximierung im Bereich der angeordneten Dichtrippen 32. Vorliegend wird diese Wirkung durch eine im Querschnitt zunehmende Materialstärke des Innenkragens 16 erreicht. Zusätzlich ist der Innenkragen 16 in der radialen Erstreckung nach außen zunehmend zur inneren Rohrwand 3 angestellt ausgeformt bzw. gekrümmt, um weiterhin den Druckpunkt möglichst weit nach radial außen zu verlagern. Zwischen den Dichtrippen 32 und dem Zylinderabschnitt 21 kann der Dichtungsring 19 insbesondere im nicht gespannten Zustand durch die konstruktive Gestaltung des Innenkragens 16 hohl liegen, sodass beim Spannen der Spannmittel 9 eine große Flächenpressung erzielbar ist. Je ausgeprägter die Krümmung bzw. je größer die Materialstärke, desto größer sind die auf die Dichtrippen 32 abdichtungswirksamen Druckkräfte beim Spannen der Spannmittel 9. Eine Beabstandung eines Druckpunktes von der Abzweigöffnung 14 ist vorteilhaft, da insbesondere Wellrohre 2 im Bereich um eine Abzweigöffnung 14 instabiler sind. Zudem können im Zuge des Einbringens der Abzweigöffnung 14 Beschädigungen an der inneren Rohrwand 3 auftreten, welche einer Abdichtung entgegenwirken können. Je weiter der Druckpunkt für die Abdichtung von der Abzweigöffnung 14 entfernt ist, desto höher ist die Wahrscheinlichkeit, eine solide, unbeschädigte innere Rohrwand 3 als Dichtfläche verwenden zu können.

### Bezugszeichen:

- 1: Anschlussstutzen
- 2: Wellrohr
- 3: Innere Rohrwand
- 4: Äußere Rohrwand
- 5: Außenteil
- 6: Anschlussstück
- 7: Außenkragen
- 8: Öffnung
- 9: Spannmittel
- 10: Schraube
- 11: Mutter
- 12: Stützrippe
- 14: Abzweigöffnung
- 15: Innenteil
- 16: Innenkragen
- 17: Schraubenkopf
- 18: Aufnahmemulde
- 19: Dichtungsring
- 20: Erste Dichtungszone
D = Dichtungsbereich
- 21: Zylinderabschnitt
- 22: Zweite Dichtungszone
- 23: Dritte Dichtungszone
- 24: Durchführungsöffnung
- 25: Erster Abschnitt
- 26: Zweiter Abschnitt
- 27: Sockel
- 28: Anlagefläche
- 29: Stütznase
- 30: Bohrung
- 31: Kerbe
- 32: Dichtrippe
- 33: Stutzen
- 34: Stützführung

## Patentansprüche

1. Mehrteiliger Anschlussstutzen (1), der bestimmt ist zur Herstellung einer flüssigkeitsdichten Verbindung mit einem eine Abzweigöffnung (14) aufweisenden Hauptrohr,
• mit einem in die Abzweigöffnung (14) einführbaren Innenteil (15),
o das einen Zylinderabschnitt (21) aufweist, der dazu bestimmt ist, axial in die Abzweigöffnung (14) zu ragen,
o und das am so genannten inneren, innerhalb des Hauptrohrs anordbaren Ende einen umlaufenden, radial nach außen ragenden Innenkragen (16) aufweist, der dazu bestimmt ist, sich innerhalb des Hauptrohrs über die Abzweigöffnung (14) hinaus radial nach außen zu erstrecken,
• und mit einem Dichtungsring (19),
o der außen um den Zylinderabschnitt (21) des Innenteils (15) umläuft
o und dem Innenkragen (16) anliegt,
o und der dazu bestimmt ist, dem Hauptrohr innen um die Abzweigöffnung (14) herum abdichtend anzuliegen,
• und mit einem im Wesentlichen rohrförmigen Außenteil (5),
o das dazu bestimmt ist, sich in einem Winkel von dem Hauptrohr nach außen zu erstrecken,
o und mit dem Innenteil (15) verbunden zu werden,
**dadurch gekennzeichnet,**
**dass** das Außenteil (5) einen Außenkragen (7) aufweist, der dazu bestimmt ist, sich außerhalb des Hauptrohrs über die Abzweigöffnung (14) radial nach außen zu erstrecken, und dass sich Spannmittel (9) vom Innenkragen (16) des Innenteils (15) durch den Dichtungsring (19) hindurch zum Außenkragen (7) des Außenteils (5) erstrecken, die dazu bestimmt sind, wahlweise den Abstand zwischen dem Außenkragen (7) und dem Innenkragen (16) zu verringern.

2. Anschlussstutzen nach Anspruch 1,
**dadurch gekennzeichnet,**
**dass** das Innenteil (15) und/oder das Außenteil (7) eine Stützführung (34) aufweist, die einem Spannmittel (9) anliegt und dazu bestimmt ist, den beim Spannen der Spannmittel (9) im Innenkragen (16) auftretenden Torsionskräften entgegenzuwirken.

3. Anschlussstutzen nach Anspruch 1 oder 2,
**dadurch gekennzeichnet,**
**dass** im Außenkragen (7) Öffnungen (8) angeordnet sind, durch welche sich die Spannmittel (9) erstrecken, und dass die Spannmittel (9) außerhalb des Außenkragens (7) auf der vom Innenkragen (16) abgewandten Außenseite des Außenkragens (7) einen Betätigungsabschnitt aufweisen.

4. Anschlussstutzen nach Anspruch 3,
**dadurch gekennzeichnet,**
**dass** im Außenkragen (7) die Öffnungen (8) jeweils schlüssellochartig ausgestaltet sind,
mit einem ersten Abschnitt (25), der das Hindurchführen des Betätigungsabschnitts eines der Öffnung (8) zugeordneten Spannmittels (9) ermöglicht,
und mit einem zweiten Abschnitt (26), der einen geringeren Öffnungsquerschnitt aufweist als der erste Abschnitt (25),
wobei um den zweiten Abschnitt (26) eine Anlagefläche (28) für den Betätigungsabschnitt des Spannmittels (9) verläuft.

5. Anschlussstutzen nach Anspruch 3 oder 4,
**dadurch gekennzeichnet,**
**dass** die Spannmittel (9) jeweils eine Schraube (10) aufweisen,
deren Schraubenkopf (17) den Innenkragen (16) hintergreift,
und deren Schaft sich durch den Dichtungsring (19) und aus dem Außenkragen (7) heraus erstreckt,
wobei eine Mutter (11) außerhalb des Außenkragens (7) auf der Schraube (10) angeordnet ist.

6. Anschlussstutzen nach einem der vorhergehenden Ansprüche,
**dadurch gekennzeichnet,**
**dass** der Dichtungsring (19)
• eine erste, axiale Dichtungszone (20) aufweist, die radial außerhalb des Zylinderabschnitts (21) des Innenteils (15) um den Zylinderabschnitt (21) und parallel zu diesem verläuft,
• eine zweite, radiale Dichtungszone (22) aufweist, die radial innerhalb des Zylinderabschnitts (21) verläuft und dazu bestimmt ist, dem Außenteil (5) an dessen äußeren Umfang anzuliegen, und
• dritte Dichtungszonen (23) aufweist, die jeweils ringsum einem durch den Dichtungsring (19) verlaufenden Spannmittel (9) anliegen.

7. Anschlussstutzen nach einem der vorhergehenden Ansprüche,
**dadurch gekennzeichnet,**
**dass** der Dichtungsring (19) Durchführungsöffnungen (24) aufweist, deren Durchmesser jeweils geringer ist als der Durchmesser der Spannmittel (9) in dem Bereich, wo sich die Spannmittel (9) durch den Dichtungsring (19) erstrecken,
wobei der Dichtungsring (19) den Spannmitteln (9) unter elastischer Verformung abdichtend anliegt.

8. Anschlussstutzen nach einem der vorhergehenden Ansprüche,
**dadurch gekennzeichnet,**
**dass** das Innenteil (15) faserverstärktes Polypropylen aufweist.

9. Anschlussstutzen nach einem der vorhergehenden Ansprüche,
**dadurch gekennzeichnet,**
**dass** der Innenkragen (16) des Innenteils (15) in radialer nach außen ragender Erstreckung zum Zylinderabschnitt (21) gekrümmt ist.

10. Anschlussstutzen nach einem der vorhergehenden Ansprüche,
**dadurch gekennzeichnet,**
**dass** die Materialstärke des Innenkragens (16) des Innenteils (15) in radialer nach außen ragender Erstreckung im Querschnitt zunimmt.

11. Anschlussstutzen nach einem der vorhergehenden Ansprüche,
**dadurch gekennzeichnet,**
**dass** der Außendurchmesser des Innenkragens (16) um wenigstens den Faktor 1,1 vergrößert ist zum Durchmesser der Abzweigöffnung (14).

12. Anschlussstutzen nach Anspruch 11,
**dadurch gekennzeichnet,**
**dass** der Faktor zwischen 1,1 und 1,13 beträgt.

13. Anschlussstutzen nach einem der vorhergehenden Ansprüche,
**dadurch gekennzeichnet,**
**dass** das Außenteil (5) abschnittsweise dazu bestimmt ist, axial in die Abzweigöffnung (14) zu ragen,
und **dass** der Dichtungsring (19) dem äußeren Umfang des Außenteils (5) zumindest abschnittsweise anliegt.

14. Anschlussstutzen nach einem der vorhergehenden Ansprüche,
**dadurch gekennzeichnet,**
**dass** die Spannmittel (9) in radialem Abstand nach außen von einem als Stutzen bezeichneten Abschnitt des Außenteils (33) angeordnet sind, wobei der Stutzen axial in die Abzweigöffnung ragt.

## Claims

1. Multi-part connection piece (1) intended for establishing a liquid-tight connection to a main pipe which has a branch opening (14),
• with an inner part (15) which can be inserted into the branch opening (14),
o which main pipe has a cylindrical portion (21) intended to protrude axially into the branch opening (14),
o and which main pipe has, at the so-called inner end which can be arranged within the main tube, an inner collar (16) which runs around it, protrudes radially outwards and is intended to extend radially outwards within the main tube beyond the branch opening (14),
• and having a sealing ring (19)
o which runs around the outside of the cylindrical portion (21) of the inner part (15)
o and bears against the inner collar (16),
o and which sealing ring is intended to bear against the main pipe in a sealing manner on the inside around the branch opening (14),
• and having a substantially tubular outer part (5)
o which is intended to extend outwards at an angle from the main pipe
o and to be connected to the inner part (15),
**characterized**
**in that** the outer part (5) has an outer collar (7) which is intended to extend radially outwards outside the main tube beyond the branch opening (14), and in that clamping devices (9) extend from the inner collar (16) of the inner part (15) through the sealing ring (19) to the outer collar (7) of the outer part (5), which clamping devices are intended to optionally reduce the spacing between the outer collar (7) and the inner collar (16).

2. Connection piece according to Claim 1,
**characterized**
**in that** the inner part (15) and/or the outer part (7) have/has a supporting guide (34) which bears against a clamping device (9) and is intended to counteract the torsional forces occurring during clamping of the clamping devices (9) in the inner collar (16).

3. Connection piece according to Claim 1 or 2,
**characterized**
**in that** openings (8) are arranged in the outer collar (7), through which openings the clamping devices (9) extend, and in that the clamping devices (9) have an actuating portion outside the outer collar (7) on the outer side of the outer collar (7) facing away from the inner collar (16).

4. Connection piece according to Claim 3,
**characterized**
**in that** the openings (8) in the outer collar (7) are each of keyhole-like configuration,
with a first portion (25) which allows the actuating portion of a clamping device (9) which is assigned to the opening (8) to be passed through,
and with a second portion (26) which has a smaller opening cross section than the first portion (25), wherein a bearing surface (28) for the actuating portion of the clamping device (9) extends around the second portion (26).

5. Connection piece according to Claim 3 or 4,
**characterized**
**in that** the clamping devices (9) each have one screw (10),
the screw head (17) of which engages behind the inner collar (16),
and the shank of which extends through the sealing ring (19) and out of the outer collar (7),
wherein a nut (11) is arranged outside the outer collar (7) on the screw (10).

6. Connection piece according to one of the preceding claims,
**characterized**
**in that** the sealing ring (19)
• has a first, axial sealing zone (20) which runs radially outside the cylindrical portion (21) of the inner part (15) around the cylindrical portion (21) and parallel to it,
• a second, radial sealing zone (22) which radially extends inside the cylindrical portion (21) and is intended to bear against the outer part (5) on its outer circumference, and
• has third sealing zones (23) which each bear all around against a clamping device (9) which runs through the sealing ring (19).

7. Connection piece according to one of the preceding claims,
**characterized**
**in that** the sealing ring (19) has leadthrough openings (24), the diameter of each of which is smaller than the diameter of the clamping devices (9) in the area where the clamping devices (9) extend through the sealing ring (19),
wherein the sealing ring (19) bears sealingly against the clamping devices (9) with elastic deformation.

8. Connection piece according to one of the preceding claims,
**characterized**
**in that** the inner part (15) comprises fibre-reinforced polypropylene.

9. Connection piece according to one of the preceding claims,
**characterized**
**in that** the inner collar (16) of the inner part (15) is curved in a radial outwardly protruding extension with respect to the cylindrical portion (21).

10. Connection piece according to one of the preceding claims,
**characterized**
**in that** the material thickness of the inner collar (16) of the inner part (15) increases in cross section in the radial outwardly protruding extent.

11. Connection piece according to one of the preceding claims,
**characterized**
**in that** the outer diameter of the inner collar (16) is increased by at least the factor of 1.1 with respect to the diameter of the branch opening (14).

12. Connection piece according to Claim 11,
**characterized**
**in that** the factor is between 1.1 and 1.13.

13. Connection piece according to one of the preceding claims,
**characterized**
**in that** the outer part (5) is intended in sections to protrude axially into the branch opening (14),
and **in that** the sealing ring (19) bears against the outer periphery of the outer part (5) at least in sections.

14. Connection piece according to one of the preceding claims,
**characterized**
**in that** the clamping devices (9) are arranged at a radial distance outwards from a portion of the outer part (33) designated as a pipe end, wherein the pipe end extends axially into the branch opening.

## Revendications

1. Embout de raccordement (1) en plusieurs parties, destiné à établir une liaison étanche aux liquides avec un tube principal présentant une ouverture de dérivation (14),
• avec une pièce intérieure (15) pouvant être introduite dans l'ouverture de dérivation (14),
o qui présente une section cylindrique (21) destinée à faire saillie axialement dans l'ouverture de dérivation (14),
o et qui présente, à l'extrémité dite intérieure pouvant être agencée à l'intérieur du tube principal, une collerette intérieure (16) périphérique faisant saillie radialement vers l'extérieur, qui est destinée à s'étendre radialement vers l'extérieur à l'intérieur du tube principal au-delà de l'ouverture de dérivation (14),
• et avec une bague d'étanchéité (19),
o qui s'étend à l'extérieur autour de la section cylindrique (21) de la pièce intérieure (15)
o et s'applique contre la collerette intérieure (16),
o et qui est destinée à s'appliquer de manière étanche contre le tube principal, à l'intérieur, autour de l'ouverture de dérivation (14),
• et avec une pièce extérieure essentiellement tubulaire (5),
o qui est destiné à s'étendre vers l'extérieur selon un angle par rapport au tube principal,
o et à être reliée à la pièce intérieure (15),
**caractérisé**
**en ce que** la pièce extérieure (5) présente une collerette extérieure (7) destinée à s'étendre radialement vers l'extérieur à l'extérieur du tube principal par l'intermédiaire de l'ouverture de dérivation (14), et en ce que des moyens de serrage (9) s'étendent depuis la collerette intérieure (16) de la pièce intérieure (15) à travers la bague d'étanchéité (19) jusqu'à la collerette extérieure (7) de la pièce extérieure (5), qui sont destinés à réduire sélectivement la distance entre la collerette extérieure (7) et la collerette intérieure (16).

2. Embout de raccordement selon la revendication 1,
**caractérisé**
**en ce que** la pièce intérieure (15) et/ou la pièce extérieure (7) présente un guidage d'appui (34) qui s'applique contre un moyen de serrage (9) et qui est destiné à s'opposer aux forces de torsion apparaissant dans la collerette intérieure (16) lors du serrage du moyen de serrage (9).

3. Embout de raccordement selon la revendication 1 ou la revendication 2,
**caractérisé**
**en ce que** des ouvertures (8) sont agencées dans la collerette extérieure (7), à travers lesquelles s'étendent les moyens de serrage (9), et en ce que les moyens de serrage (9) présentent une section d'actionnement à l'extérieur de la collerette extérieure (7), sur le côté extérieur de la collerette extérieure (7), détourné de la collerette intérieure (16).

4. Embout de raccordement selon la revendication 3,
**caractérisé**
**en ce que** dans la collerette extérieure (7), les ouvertures (8) sont respectivement conçues en forme de trous de serrure,
avec une première section (25) qui permet le passage de la section d'actionnement d'un moyen de serrage (9) associé à l'ouverture (8),
et avec une deuxième section (26) qui présente une section transversale d'ouverture plus petite que la première section (25), une surface d'appui (28) pour la section d'actionnement du moyen de serrage (9) s'étendant autour de la deuxième section (26).

5. Embout de raccordement selon la revendication 3 ou la revendication 4,
**caractérisé**
**en ce que** les moyens de serrage (9) présentent chacun une vis (10),
dont la tête de vis (17) s'engage derrière la collerette intérieure (16),
et dont la tige s'étend à travers la bague d'étanchéité (19) et hors de la collerette extérieure (7),
un écrou (11) étant agencé sur la vis (10) à l'extérieur de la collerette extérieure (7).

6. Embout de raccordement selon l'une quelconque des revendications précédentes,
**caractérisé**
**en ce que** la bague d'étanchéité (19)
• présente une première zone d'étanchéité axiale (20) qui s'étend radialement à l'extérieur de la section cylindrique (21) de la pièce intérieure (15), autour de la section cylindrique (21) et parallèlement à celle-ci,
• présente une deuxième zone d'étanchéité radiale (22) qui s'étend radialement à l'intérieur de la section de cylindre (21) et est destinée à s'appliquer contre la pièce extérieure (5) sur sa périphérie extérieure, et
• présente des troisièmes zones d'étanchéité (23) qui s'appliquent chacune tout autour d'un moyen de serrage (9) s'étendant à travers la bague d'étanchéité (19).

7. Embout de raccordement selon l'une quelconque des revendications précédentes,
**caractérisé**
**en ce que** la bague d'étanchéité (19) présente des ouvertures de passage (24) dont le diamètre est respectivement inférieur au diamètre des moyens de serrage (9) dans la zone où les moyens de serrage (9) s'étendent à travers la bague d'étanchéité (19),
la bague d'étanchéité (19) s'appliquant de manière étanche contre les moyens de serrage (9) avec déformation élastique.

8. Embout de raccordement selon l'une quelconque des revendications précédentes,
**caractérisé**
**en ce que** la pièce intérieure (15) présente du polypropylène renforcé par des fibres.

9. Embout de raccordement selon l'une quelconque des revendications précédentes,
**caractérisé**
**en ce que** la collerette intérieure (16) de la pièce intérieure (15) est courbée dans une extension radiale faisant saillie vers l'extérieur par rapport à la section cylindrique (21).

10. Embout de raccordement selon l'une quelconque des revendications précédentes,
**caractérisé**
**en ce que** l'épaisseur de matériau de la collerette intérieure (16) de la pièce intérieure (15) augmente en section transversale dans l'extension radiale faisant saillie vers l'extérieur.

11. Embout de raccordement selon l'une quelconque des revendications précédentes,
**caractérisé**
**en ce que** le diamètre extérieur de la collerette intérieure (16) est agrandi d'au moins un facteur de 1,1 par rapport au diamètre de l'ouverture de dérivation (14) .

12. Embout de raccordement selon la revendication 11,
**caractérisé**
**en ce que** le facteur est compris entre 1,1 et 1,13.

13. Embout de raccordement selon l'une quelconque des revendications précédentes,
**caractérisé**
**en ce que** la pièce extérieure (5) est destinée, par sections, à faire saillie axialement dans l'ouverture de dérivation (14),
et **en ce que** la bague d'étanchéité (19) s'applique contre la périphérie extérieure de la pièce extérieure (5) au moins par sections.

14. Embout de raccordement selon l'une quelconque des revendications précédentes,
**caractérisé**
**en ce que** les moyens de serrage (9) sont agencés à une distance radiale vers l'extérieur d'une section de la pièce extérieure (33) appelée embout, l'embout faisant saillie axialement dans l'ouverture de dérivation.
